# EUROPÄISCHE PATENTSCHRIFT

(11) **EP 3 894 711 B1**
(45) Veröffentlichungstag und Bekanntmachung des Hinweises auf die Patenterteilung: **21.12.2022**
(21) Anmeldenummer: 19813505.5
(22) Anmeldetag: 02.12.2019
(51) Int. Cl.: F16B 5/02, F16B 13/06

(54) **SPREIZDÜBEL**
EXPANSION ANCHOR
CHEVILLE À EXPANSION

(30) Priorität: 13.12.2018 DE 102018132029
(43) Veröffentlichungstag der Anmeldung: 20.10.2021
(73) Patentinhaber: fischerwerke GmbH & Co. KG, 72178 Waldachtal (DE)
(72) Erfinder: PFAU, Patrick, 72275 Alpirsbach (DE)
(86) Internationale Anmeldenummer: PCT/EP2019/083305
(87) Internationale Veröffentlichungsnummer: WO 2020/120196

(56) Entgegenhaltungen:
- DE-A1- 2 558 459
- DE-A1- 3 002 525
- DE-A1-102011 000 537
- DE-U1-202006 014 383
- FR-A1- 2 611 005
- JP-U- S5 039 661

## Beschreibung

Die Erfindung betrifft einen Spreizdübel mit den Merkmalen des Oberbegriffs des Anspruchs 1.

Aus der Offenlegungsschrift DE 25 58 459 A1 ist ein gattungsgemäßer Spreizdübel bekannt, der einstückig aus einem Kunststoff hergestellt ist. Der Spreizdübel ist zur Befestigung eines Anbauteils an einem Plattenbaustoff vorgesehen, hinter dem sich ein Hohlraum befindet, wie dies typisch für Trockenbauwände ist, die mit Gipskartonplatten beplankt sind. Der bekannte Spreizdübel weist an seinem vorderen Ende einen Spreizkörper auf, der mit einer Schraube nach hinten zu einem hülsenförmigen Bund gezogen werden kann, wodurch die Spreizschenkel aufgespreizt und gegen die Rückseite des Plattenbaustoffs gedrückt werden. Das Tragverhalten des bekannten Spreizdübels hängt direkt von der Kraft ab, mit der die Schraube den Spreizkörper gegen die Spreizschenkel drückt und davon, wie gut die Spreizschenkel diese Kraft auf den Plattenkörper übertragen können.

Aufgabe der Erfindung ist, einen Spreizdübel vorzuschlagen, dessen Tragverhalten gegenüber dem aus dem Stand der Technik bekannten Spreizdübel verbessert ist.

Diese Aufgabe wird erfindungsgemäß durch einen Spreizdübel mit den Merkmalen des Anspruchs 1 gelöst. Der erfindungsgemäße Spreizdübel dient zum Befestigen eines Anbauteils an einem Befestigungsgrund, insbesondere an einem Plattenbaustoff, insbesondere einer Gipskartonplatte. Der Spreizdübel erstreckt sich entlang einer Längsachse und kann durch einen Zylinder umschrieben werden, dessen Höhe in Richtung der Längsachse verläuft und dessen Grund- und Deckfläche das vordere und hintere Ende des Spreizdübels darstellen. Mit "vorderem Ende" ist hier das Ende des Spreizdübels gemeint, das beim planmäßigen Einbringen des Spreizdübels in ein Bohrloch als erstes in das Bohrloch eingeführt wird. Der Spreizdübel weist einen hülsenförmigen Abschnitt, einen Spreizkörper und ein Spreizteil auf, das zwischen dem hülsenförmigen Abschnitt und dem Spreizkörper angeordnet ist. Insbesondere bildet der Spreizkörper das vordere Ende des Spreizdübels. Der Spreizkörper weist insbesondere eine zylindrische Grundform auf, mit einem konischen oder mit Schrägflächen versehenen hinteren Abschnitt, der dem Spreizteil zugewandt ist oder in dieses eingreift. Dagegen kann der hülsenförmige Abschnitt insbesondere das hintere Ende des Spreizdübels bilden. Der hülsenförmige Abschnitt weist insbesondere einen Bund und/oder ein anderes Anschlagelement auf, das begrenzt, wie weit der Spreizdübel in ein Bohrloch eingesteckt werden kann. Das Spreizteil weist mindestens zwei Spreizelemente auf, die in einem nicht aufgespreizten Zustand einstückig mit dem hülsenförmigen Abschnitt und dem Spreizkörper verbunden sind. Insbesondere sind die Spreizelemente gelenkig mit dem hülsenförmigen Abschnitt verbunden, wobei die verbindenden Gelenke insbesondere durch eine lokale Materialschwächung gebildet werden, beispielsweise durch eine in einer Umfangsrichtung um die Längsachse des Spreizdübels umlaufenden Nut. Der "nicht aufgespreizte Zustand" ist der Zustand, in dem der Spreizdübel planmäßig in ein Bohrloch eingebracht wird, wobei in diesem Zustand der Spreizkörper noch einstückig und fest mit dem Spreizteil verbunden ist, was dem Spreizdübel die für das Eintreiben in ein Bohrloch notwendige Stabilität gibt.

Der Spreizdübel weist einen mittig, entlang der oder parallel zur Längsachse verlaufenden Schraubkanal auf, in den eine Spreizschraube eingeschraubt werden kann. Die Längsachse und der Schraubkanal verlaufen parallel zur Einbringrichtung des Spreizdübels in ein Bohrloch. Mittels der Spreizschraube kann der Spreizkörper relativ zu den Spreizelementen hin zum hülsenförmigen Abschnitt bewegt werden, wodurch der Spreizkörper die Spreizelemente radial zur Längsachse auseinanderdrückt und das Spreizteil im Umfang erweitert, also aufspreizt. Beim Aufspreizen lösen sich die Spreizelemente an Solltrennstellen vom Spreizkörper. Im nicht aufgespreizten Zustand bilden die Solltrennstellen eine feste Verbindung zwischen dem Spreizkörper und den Spreizelementen, wobei jeweils mindestens eine Solltrennstelle zwischen einem Spreizelement und dem Spreizkörper ausgebildet ist. Durch die Verbindung über die Solltrennstellen weist der Spreizdübel eine ausreichende Festigkeit auf, insbesondere eine Festigkeit gegen ein Knicken oder ein Biegen um eine zur Längsachse senkrechte Achse, so dass der Spreizdübel auch mit größerem axialen Druck in ein enges Bohrloch eingebracht werden kann. Beim Aufspreizen werden diese Solltrennstellen zerstört, so dass die Spreizelemente in einem aufgespreizten Zustand vom Spreizkörper getrennt sind. Durch das Trennen vom Spreizkörper sind die Spreizelemente nur noch an ihren hinteren Enden mit dem hülsenförmigen Abschnitt verbunden. Die vorderen Enden der Spreizelemente können somit beim Aufspreizen mit dem Spreizkörper weit und mit geringer Kraft radial nach außen bewegt und gegen beispielsweise die Rückseite einer Gipskartonplatte gedrückt werden, an der der Spreizdübel befestigt wird.

Wird die Spreizschraube zum Lösen des Anbauteils vom Befestigungsgrund wieder aus dem Spreizdübel ausgeschraubt, verhindern Verbindungselemente, dass der Spreizkörper sich von den übrigen Teilen des Spreizdübels lösen kann, und beispielsweise in einen Hohlraum des Befestigungsgrunds fällt. Das Spreizteil weist mindestens zwei dieser Verbindungselemente auf, die den hülsenförmigen Abschnitt und den Spreizkörper sowohl im nicht aufgespreizten Zustand, wie auch im aufgespreizten Zustand einstückig verbinden. Das heißt, im Gegensatz zu den Spreizelementen trennen sich die Verbindungselemente auch beim Aufspreizen nicht vom Spreizköper oder vom hülsenförmigen Abschnitt, mit dem sie direkt oder indirekt verbunden sind.

Erfindungsgemäß sind die Verbindungselemente mit dem Spreizkörper formschlüssig verbunden. Das heißt, ein Verbindungselement greift mit einem Formschlusselement in den Spreizkörper ein. Der Eingriff erfolgt in einem definiert abgegrenzten Raum, der insbesondere ein negatives Abbild des Verbindungselements darstellt, wodurch eine feste, im planmäßigen Gebrauch unlösbare Verbindung zwischen dem Spreizkörper und dem Verbindungselement besteht. Insbesondere besteht zwischen dem Formschlusselement und dem Spreizkörper eine definierte Grenzfläche, die den Übergang vom Formschlusselement zum Spreizkörper definiert. Mit "Formschlusselement" wird hier ein Element bezeichnet, das insbesondere in komplementäre Aussparungen, Öffnungen oder Einschnitte im Spreizkörper eingreift, derart, dass das Formschlusselement Teile des Spreizkörpers hintergreift, wodurch der Spreizkörper mit dem Verbindungselement zugfest verbunden ist, auch wenn kein zusätzlicher Stoffschluss zwischen dem Verbindungselement und dem Spreizkörper besteht.

Durch die formschlüssige Verbindung ist es möglich, den Spreizkörper und/oder die übrigen Teile des Spreizdübels gesondert herzustellen und erst nach dem Herstellen des Spreizkörpers und/oder der übrigen Teile miteinander zu verbinden. Dadurch ist es möglich, den Spreizkörper aus einem Material herzustellen, das fester als das Material ist, aus dem die Verbindungselemente und/oder die Spreizelemente hergestellt sind, die beispielsweise aus einem weniger spröden, sondern zäheren Material hergestellt sind, als der Spreizkörper, das aber eine geringere Härte aufweist, als das Material, aus dem der Spreizkörper hergestellt ist.

Vorzugsweise weisen die Verbindungselemente an ihren dem Spreizkörper zugewandten Enden jeweils mindestens ein Formschlusselement auf, das formschlüssig in den Spreizkörper eingreift. Es können auch mehrere Formschlusselemente vorgesehen sein. Vorzugsweise ist das Formschlusselement keilartig ausgestaltet, mit einer vom hülsenförmigen Abschnitt abgewandten Spitze. "Keilartig" umfasst insbesondere einen Grundkörper des Formschlusselements, der pfeilspitzen-, kegelstumpf-, kegel-, pyramidenstumpf- oder pyramidenförmig ausgeführt ist, oder der allgemein einen dreieckförmigen Querschnitt aufweist, wobei die Grundfläche des Grundkörpers das hintere Ende des Formschlusselements bildet, also dem hülsenförmigen Abschnitt zugewandt ist. Das heißt, dass das hintere Ende des Formschlusselements, bezogen auf eine Radialebene zur Längsachse des Spreizdübels, einen größeren Querschnitt aufweist, als das vordere Ende des Formschlusselements. Insbesondere verläuft die Grundfläche in einer Radialebene zur Längsachse des Spreizdübels, wobei sie insbesondere konkav gegenüber dem hülsenförmigen Abschnitt gewölbt ist. Ein derartig gestaltetes Formschlusselement lässt sich gut mit dem Spreizkörper verbinden und kann im Spreizkörper eine relativ große Fläche aktivieren, so dass eine ausreichend hohe Zugkräfte zwischen dem Formschlusselement und dem Spreizkörper übertragen werden kann, die verhindert, dass sich der Spreizkörper beim Ausschrauben der Spreizschraube von den Verbindungselementen löst.

Bei einer bevorzugten Ausgestaltungsform des erfindungsgemäßen Spreizdübels besteht der Spreizkörper aus einem ersten Kunststoff und das Spreizteil aus einem zweiten Kunststoff. Insbesondere wird der erfindungsgemäße Spreizdübel in einem Mehrkomponenten-Spritzgussverfahren aus mindestens zwei Kunststoffkomponenten hergestellt, was eine einfache, kostengünstige Herstellung des Spreizdübels ermöglicht. Dabei wird insbesondere zunächst das Spreizteil, insbesondere gemeinsam mit dem hülsenförmigen Abschnitt, gespritzt und dann der Spreizkörper gespritzt, wobei die Formschlusselemente mit dem Kunststoff des Spreizkörpers zumindest teilweise formschlüssig umspritzt werden. Insbesondere sind der hülsenförmige Abschnitt und das Spreizteil einstückig aus dem zweiten Kunststoff hergestellt.

Insbesondere ist der erste Kunststoff, aus dem der Spreizkörper hergestellt ist, faserverstärkt. "Faserverstärkt" meint hier, dass in der Kunststoffmatrix Verstärkungsfasern eingebettet sind. Gebräuchliche Verstärkungsfasern für Kunststoffe sind insbesondere Glasfasern oder Kohlestofffasern, was die Verwendung anderer Fasern im Rahmen der Erfindung aber nicht ausschließt. Durch die Verwendung der Verstärkungsfasern können die Materialeigenschaften des Spreizkörpers eingestellt werden. Insbesondere ist der Spreizkörper aufgrund der Faserverstärkung des ersten Kunststoffs härter und weist eine höhere Festigkeit auf, als das Spreizteil, das dagegen zäher und leichter verformbar als der Spreizkörper ist, und sich somit besser an die Rückseite einer Gipskartonplatte, allgemein an den Befestigungsgrund, zur Kraftübertragung anlegen beziehungsweise anpassen kann. Dagegen ist ein harter Spreizkörper bestens geeignet, um die Spreizelemente gegen den Befestigungsgrund zu drücken, wobei eine Verformung des Spreizkörpers nachteilig wäre. Ein derartig ausgestalteter Spreizdübel weist daher ein sehr gutes Spreiz- und Tragverhalten auf. Insbesondere ist der zweite Kunststoff nicht faserverstärkt.

Weiterhin ist bevorzugt, dass der erste Kunststoff im Wesentlichen die gleiche Schmelztemperatur aufweist, wie der zweite Kunststoff. "Im Wesentlichen gleich" meint hier, dass die Schmelztemperaturen so gewählt sind, dass wenn einer der Kunststoffe beim Spritzgießen an den anderen, bereits festen Kunstsoff angespritzt wird, der angespritzte Kunstsoff den bereits zuvor gespritzten und insbesondere bereits festen Kunststoff anschmelzt, diesen also zumindest lokal und zumindest oberflächlich so weich werden lässt, dass die beiden Kunststoffe sich verbinden, derart, dass eine stoffschlüssige Verbindung zwischen den Kunststoffen hergestellt wird. Insbesondere liegen die Schmelztemperaturen nicht mehr als 30 Grad Kelvin, insbesondere nicht mehr als 20 Grad Kelvin, insbesondere nicht mehr als 10 Grad Kelvin auseinander.

Vorzugsweise sind beide Kunststoffe Polyamide. Insbesondere ist der erste Kunststoff ein Polyamid, in dem mindestens 20 Gewichtsprozent Glasfasern als Verstärkung eingebettet sind, während der zweite Kunststoff das gleiche Polyamid ist, aber maximal 10 Gewichtsprozent Glasfasern, insbesondere keine Faserverstärkung aufweist.

Die Spreizelemente sind mit dem Spreizkörper vorzugsweise stoffschlüssig verbunden. Die stoffschlüssigen Verbindungen zwischen den Spreizelementen und dem Spreizkörper bilden die Solltrennstellen zwischen den Spreizelementen und dem Spreizkörper. "Stoffschlüssig verbunden" heißt, dass die Solltrennstellen, an denen die Spreizelemente mit dem Spreizkörper verbunden sind, durch eine stoffschlüssige Verbindung gebildet werden. Insbesondere wird die stoffschlüssige Verbindung direkt beim Herstellen des Spreizkörpers und/oder der Spreizelemente gebildet. Vorzugsweise wird die stoffschlüssige Verbindung durch lokales Verschweißen durch Anschmelzen der Spreizelemente und/oder des Spreizkörpers bei der Herstellung des Spreizdübels erzeugt. Beispielsweise wird zunächst das Spreizteil, insbesondere gemeinsam mit dem hülsenförmigen Abschnitt hergestellt, insbesondere einstückig aus dem zweiten Kunststoff. Dann wird der Spreizkörper aus dem ersten Kunststoff an das Spreizteil angespritzt. Dabei schmelzt der erste Kunststoff den zweiten Kunststoff, der insbesondere eine im Wesentlichen gleiche Schmelztemperatur aufweist, an, wodurch sich der erste und der zweite Kunststoff lokal stoffschlüssig verbinden. Dabei werden die Solltrennstellen gebildet, also die Stellen, an denen die Spreizelemente und der Spreizkörper stoffschlüssig verbunden sind. Vorteilhaft an dieser Art der Herstellung der Solltrennstellen ist, dass zur Verbindung, also zum Ausbilden der Solltrennstellen, kein zusätzlicher Klebstoff verwendet werden muss und somit kein zusätzlicher Verfahrensschritt notwendig ist, der Spreizkörper und die Spreizelemente aber trotzdem aus unterschiedlichen Kunststoffen oder aus unterschiedlich verstärkten Kunststoffen bestehen kann.

Darüber hinaus können auch die Formschlusselemente, die ebenfalls aus dem zweiten Kunststoff bestehen, zusätzlich zu ihrer formschlüssigen Verbindung mit dem Spreizkörper stoffschlüssig mit diesem verbunden sein und zwar ebenfalls durch ein Verschweißen durch Anschmelzen bei der Herstellung des Spreizdübels.

Um einen Drehwinkel des Spreizkörpers in Bezug auf das Spreizteil beim Einschrauben der Spreizschraube auf beispielsweise etwa 90° oder etwa 180° zu begrenzen, weist der Spreizdübel insbesondere eine Drehwinkelbegrenzung des Spreizkörpers in Bezug auf das Spreizteil auf. Die Drehwinkelbegrenzung kann beispielsweise aus einem Drehanschlag bestehen.

Zum Aufspreizen der Spreizelemente kann eine schräge Spiralfläche als Spreizfläche am Spreizkörper ausgebildet sein. "Schräg" meint, dass Mantellinien der Spreizfläche schräg zur Längsachse des Spreizdübels verlaufen. Die Mantellinien der Spreizfläche müssen keine Geraden sein, die Spreizfläche kann auch ballig, hohlrund, gewellt usw. sein. Zugleich kann die Spreizfläche des Spreizkörpers eine Spiralfläche sein, also in einer Umfangsrichtung und radial von der Längsachse von innen nach außen verlaufen. Durch die Ausführung einer Spreizfläche des Spreizkörpers als schräge Spiralfläche, spreizt der Spreizkörper die Spreizelemente durch eine Bewegung des Spreizkörpers zwischen die Spreizelemente und/oder durch eine Drehung des Spreizkörpers zwischen den Spreizelementen auf. "Zwischen den Spreizelementen" bedeutet, dass sich jedenfalls die Spreizfläche des Spreizkörpers zumindest teilweise zwischen den Spreizelementen befindet, die weiteren Teile des Spreizkörpers können sich dabei auch außerhalb der Spreizelemente befinden.

Für einen Gewindeeingriff einer Spreizschraube kann am Spreizkörper ein Widerlagerteil angeordnet sein. Das Widerlagerteil ist insbesondere ein separat vom übrigen Spreizkörper hergestelltes und am Spreizkörper angeordnetes Teil. Es weist insbesondere eine Durchgangsöffnung für die Spreizschraube auf. In die Durchgangsöffnung ragen kragarmförmige Widerlagerelemente für einen Gewindeeingriff mit dem Außengewinde der Spreizschraube, wodurch eine größere Anpassung an unterschiedliche Schraubendurchmesser und/oder Schraubengewinde möglich ist, als mit einem kreisförmigen Lochrand. In die Durchgangsöffnung mit den kragarmförmigen Widerlagerelementen lässt sich beispielsweise ein Holzschraubengewinde ebenso einschrauben wie ein Maschinengewinde. Insbesondere ist das Widerlagerteil ein Blechstanzteil, das insbesondere vom ersten Kunststoff beim Herstellen des Spreizkörpers formschlüssig umspritzt oder nach dem Spritzen des Spreizkörpers mit dem Spreizkörper verbunden wurde.

Die Erfindung wird nachfolgend anhand eines in der Zeichnung dargestellten Ausführungsbeispiels näher erläutert. Es zeigen:
- Figur 1: einen erfindungsgemäßen Spreizdübel in einer perspektivischen Darstellung in einem nicht aufgespreizten Zustand; und
- Figur 2: den Spreizdübel aus Figur 1 in einer Seitenansicht aufgespreizt in einem Bohrloch.

Der in der Zeichnung dargestellte, erfindungsgemäße Spreizdübel 1 weist ein Spreizteil 2 und einen Spreizkörper 3 auf. Das Spreizteil 2 besteht aus einem Kunststoff, im Ausführungsbeispiel aus einem Polyamid, nachfolgend "zweiter Kunststoff" genannt. An das Spreizteil 2 schließt sich ein hülsenförmiger Abschnitt 4, der auch als ringförmig oder rohrförmig aufgefasst werden kann, der den hinteren Teil des Spreizdübels 1 bildet. der hülsenförmige Abschnitt 4 weist an seinem hinteren Ende einen umlaufenden Bund 22 und Verdrehsicherungsrippen 23 auf.

Spreizelemente 5 des Spreizteils 2 sind gelenkig mit dem hülsenförmigen Abschnitt 4 verbunden. Diese streifenförmigen Spreizelemente 5 stehen, wie auch stabförmige Verbindungselemente 6, am Umfang und parallel zur Längsachse L nach vorne vom hülsenförmigen Abschnitt 4 ab. Im Ausführungsbeispiel weist das Spreizteil 2 des Spreizdübels 1 zwei Spreizelemente 5 und zwei Verbindungselemente 6 auf, die einander jeweils gegenüber angeordnet sind, so dass sich die Verbindungselemente 6 am Umfang des Spreizdübels 1 zwischen den Spreizelementen 5 befinden. Sowohl die Spreizelemente 5 als auch die Verbindungselemente 6 gehen an ihren dem Spreizkörper 3 fernen, hinteren Enden einstückig in den hülsenförmigen Abschnitt 4 über, mit dem sie einstückig aus im Spritzgießverfahren aus dem zweiten Kunststoff hergestellt sind.

Der Spreizkörper 3 ist koaxial zum Spreizteil 2 an den ihm nahen und damit dem hülsenförmigen Abschnitt 4 fernen Enden der Spreizelemente 5 und der Verbindungselemente 6 angeordnet. Der Spreizkörper 3 befindet sich zum Teil zwischen den Spreizelementen 5 und zum Teil axial außerhalb der Spreizelemente 5. Der Spreizkörper 3 weist ein axiales Durchgangsloch 7 auf, das konzentrisch zu einer Durchgangsöffnung des hülsenförmigen Abschnitts 4 des Spreizteils 2 ist, allerdings einen kleineren Durchmesser aufweist, und wie die Durchgangsöffnung einen Teil eines Schraubkanals für eine Spreizschraube 15 bildet. An einer dem hülsenförmigen Abschnitt 4 des Spreizteils 2 zugewandten Stirnseite weist der Spreizkörper 3 zwei schräge Spiralflächen als Spreizflächen 8 auf, die sich jeweils über weniger als 180° in Umfangsrichtung erstrecken. Die schrägen Spiralflächen können als Kegelstumpfflächen aufgefasst werden, deren Radius sich in einer Umfangsrichtung vergrößert. Aufgrund ihrer Schräge zur Längsachse L drücken die Spreizflächen 8 des Spreizkörpers 3 die Spreizelemente 5 des Spreizteils 2 auseinander, wenn der Spreizkörper 3 zwischen die Spreizelemente 5 bewegt wird. Aufgrund ihrer Spiralform, das heißt der Vergrößerung ihrer Radien in der einen Umfangsrichtung, drücken die Spreizflächen 8 des Spreizkörpers 3 die Spreizelemente 5 des Spreizteils 2 auch auseinander, wenn der Spreizkörper 3 in Bezug zum Spreizteil 2 gedreht wird und sich die Spreizflächen 8 zwischen den Spreizelementen 5 befinden. Das Auseinanderdrücken der Spreizelemente 5 kann auch als Aufspreizen der Spreizelemente 5 beziehungsweise des Spreizdübels 1 bezeichnet werden. Die Spreizelemente 5 lassen sich also sowohl durch eine Bewegung des Spreizkörpers 3 zwischen sie als auch durch eine Drehung des Spreizkörpers 3 zwischen ihnen und auch durch eine Kombination aus beiden Bewegungen aufspreizen.

Der Spreizkörper 3, das Spreizteil 2 und der hülsenförmige Abschnitt 4 bestehen alle aus dem gleichen Polyamid. Allerdings weist der Spreizkörper 3 eine Faserverstärkung von 30 Gewichtsprozent Glasfasern in der Kunststoffmatrix auf. Dieses verstärkte Polyamid des Spreizkörpers 3 wird nachfolgend als "erster Kunststoff" bezeichnet. Dagegen wird das nicht verstärkte Polyamid, aus dem das Spreizteil und der hülsenförmige Abschnitt 4 hergestellt sind, wie bereits erwähnt, als "zweiter Kunststoff' bezeichnet.

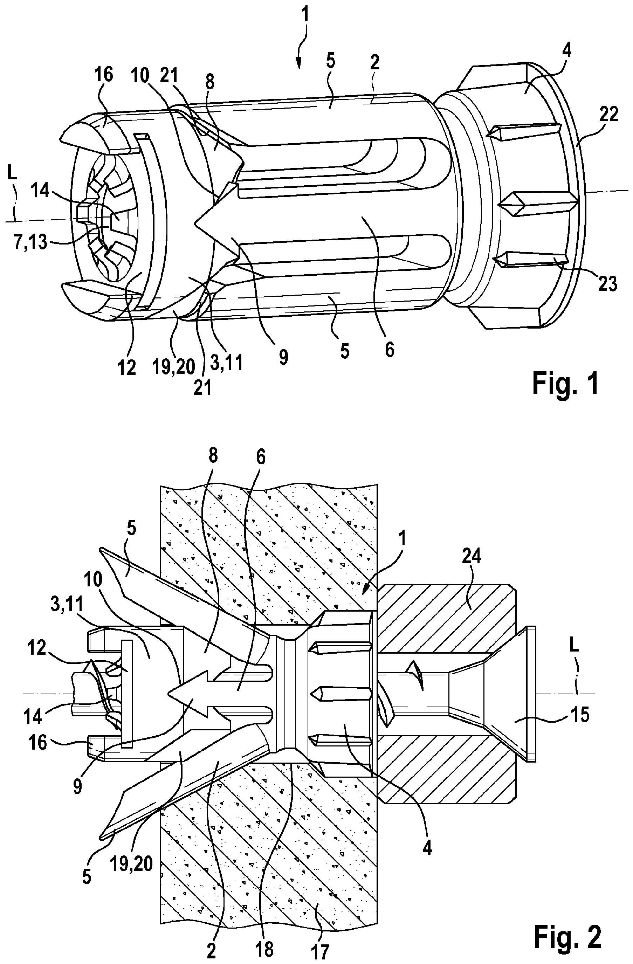

Zwischen dem Spreizkörper 3 und den vorderen, dem Spreizkörper 3 zugewandten Enden der Spreizelemente 5 befinden sich im nicht aufgespreizten Zustand Solltrennstellen 21, an denen die Spreizelemente 5 einstückig und stoffschlüssig mit dem Spreizkörper 3 verbunden sind. Die Solltrennstellen 21 sind flächig und verlaufen schräg zur Längsachse L. Die Solltrennstellen 21 sind beim Spritzgießen des Spreizdübels 1 durch Anspritzen des Spreizkörpers 3 an die Spreizelemente 5 entstanden. Da die beiden Kunststoffe eine im Wesentlichen gleiche Schmelztemperatur aufweisen, kommt es beim Anspritzen des Spreizkörpers 3 zu einem lokalen Anschmelzen der zuvor bereits gespritzten Spreizelemente 5 an deren vorderen Enden. Aufgrund seiner im Wesentlichen gleichen Schmelztemperatur wird der zweite Kunststoff an den vorderen Enden der Spreizteile 5 durch den angespritzten ersten Kunststoff so sehr erwärmt, dass die beiden Kunststoffe sich miteinander verbinden, so dass eine stoffschlüssige Verbindungsstelle, die Solltrennstelle 21, entsteht. Im nicht verspreizten Zustand ist der hülsenförmige Abschnitt 4 über die Spreizelemente 5 und die Verbindungselemente 6 einstückig und fest mit dem Spreizkörper 3 verbunden, so dass der Spreizdübel 1 ausreichend stabil ist, um auch in ein enges Bohrloch 18 (Figur 2) eingeführt zu werden.

An ihren dem Spreizkörper 3 zugewandten Enden weisen die Verbindungselemente 6 Formschlusselemente 9 auf, die radial zum Spreizdübel 1 auf dessen Umfangsfläche gesehen die Form von Pfeilspitzen aufweisen, deren Grundfläche dem hülsenförmigen Abschnitt 4 zugewandt ist. Die Formschlusselemente 9 der Verbindungselemente 6 sind in komplementären Aussparungen 10 an einem Umfang des Spreizkörpers 3 aufgenommen, so dass die Verbindungselemente 6 mittels ihrer Formschlusselemente 9 den Spreizkörper 3 mit dem Spreizteil 2 verbinden. Die Formschlusselemente 9 der Verbindungselemente 6 und die komplementären Aussparungen 10 verbinden die Verbindungselemente 6 mit dem Spreizkörper 3 formschlüssig. Durch das Anspritzen des Spreizkörpers 3 an die Verbindungselemente 6 sind die Formschlusselemente 9 durch lokales Verscheißen durch Anschmelzen bei Umspritzen der Formschlusselemente 9 mit dem ersten Kunststoff, aus dem der Spreizkörper 3 hergestellt ist, zusätzlich stoffschlüssig mit dem Spreizkörper 3 verbunden.

Wird der Spreizkörper 3, wie in Figur 2 zu sehen, mittels einer Spreizschraube 15 zwischen die Spreizelemente 5 bewegt, können die Verbindungselemente 6 wie gezeichnet gestaucht werden und/oder anders als gezeichnet nach außen oder in Umfangsrichtung knicken oder biegen. Bei einer Drehung des Spreizkörpers 3 in Bezug zum Spreizteil 2 verformen sich die Verbindungselemente 6 S-förmig oder wendelförmig. Auch Kombinationen solcher Verformungen oder eine andere Verformung der Verbindungselemente 6 sind möglich. Aufgrund der formschlüssigen Verbindung bleiben die Verbindungselemente 6 und der Spreizkörper 3 aber auch in diesem verformten Zustand fest miteinander verbunden.

Um eine Drehung des Spreizkörpers 3 in Bezug zum Spreizteil 2 zu begrenzen, weist der Spreizkörper 3 im Bereich seiner Spreizflächen 8 zwei einander gegenüber in einer Axialebene des Spreizkörpers 3 angeordnete Anschlagflächen 19 auf, die radial von einer Seite auf den Spreizkörper 3 gesehen einander entgegengesetzt und damit in Umfangsrichtung gesehen in gleicher Umfangsrichtung orientiert sind. Bei einer Drehung des Spreizkörpers 3 in Bezug zum Spreizteil 2 stoßen die Anschlagflächen 19 gegen die Verbindungselemente 6 oder gegen die Spreizelemente 5 und begrenzen dadurch einen Drehwinkel des Spreizkörpers 3 in Bezug zum Spreizteil 2 auf etwa 90°. Die Anschlagflächen 19 können auch als Drehanschlag 20 aufgefasst werden. Sie begrenzen einen Drehwinkel des Spreizkörpers 3 in Bezug zum Spreizteil 2 so, dass die Spreizflächen 8 bei einer Drehung des Spreizkörpers 3 zwischen den Spreizelementen 5 die Spreizelemente 5 maximal spreizen.

An einer dem hülsenförmigen Abschnitt 4 abgewandten Seite der Spreizflächen 8 des Spreizkörpers 3 schließt sich ein zylindrischer Abschnitt 11 an, an dessen radialer, dem hülsenförmigen Abschnitt 4 des Spreizteils 2 abgewandter Stirnseite ein Widerlagerteil 12 angeordnet ist. Das Widerlagerteil 12 ist eine aus Blech gestanzte Lochscheibe, mit einem Loch 13, in das kragarmförmige Widerlagerelemente 14 ragen. Die radial nach innen stehenden Widerlagerelemente 14 sind bogenförmig nach innen und von dem hülsenförmigen Abschnitt 4 weg nach vorn gebogen. Durch die Widerlagerelemente 14 kann sich das Widerlagerteil 12 an unterschiedliche Schraubendurchmesser und verschiedene Gewindeformen einer Spreizschraube 15 anpassen. Es ist die Verwendung beispielsweise einer Holzschraube ebenso wie einer Maschinenschraube als Spreizschraube 15 möglich.

Das Widerlagerteil 12 ist zwischen zwei einander gegenüber achsparallel an einem Umfang von der dem hülsenförmigen Abschnitt 4 abgewandten Stirnseite des Spreizkörpers 3 abstehenden Laschen 16 gehalten, die Schlitze an ihren einander zugewandten Innenseiten aufweisen, in denen die das Widerlagerteil 12 bildende Lochscheibe einliegt.

Zu einer Befestigung eines Anbauteils 24 (Figur 2) an beziehungsweise in einem Befestigungsgrund, hier einer Gipskartonplatte 17, wird der Spreizdübel 1 wie in Figur 2 zu sehen in eine durchgehende Bohrung, die hier als Bohrloch 18 bezeichnet wird, so eingebracht, dass der Spreizkörper 3 und die freien Enden der Spreizelemente 5 auf einer Rückseite aus der Platte 17 austreten und das Spreizteil 2 bündig mit einer Vorderseite der Platte 17 im Bohrloch 18 versenkt ist, wobei der Bund 22 das Einführen des Spreizdübels 1 in das Bohrloch 18 begrenzt. Zum Aufspreizen wird eine Spreizschraube 15 durch den hülsenförmigen Abschnitt 4 und zwischen den Spreizelementen 5 und den Verbindungselementen 6 des Spreizteils 2 hindurch in das axiale Durchgangsloch 7 des Spreizkörpers 3 eingeführt und in den Spreizkörper 3 und dessen Widerlagerteil 12 ein- und durchgeschraubt. Ein Schraubengewinde der Spreizschraube 15 kann sich in das Durchgangsloch 7 des Spreizkörpers 3 einschneiden. Ein Durchmesser der Durchgangsöffnung des hülsenförmigen Abschnitts 4 ist größer als der Durchmesser des Durchgangslochs 7 des Spreizkörpers 3, so dass sich das Gewinde der Spreizschraube 15 nicht in die Durchgangsöffnung des hülsenförmigen Abschnitts 4 einschneidet. Unabhängig von einem Gewindeeingriff der Spreizschraube 15 im Durchgangsloch 7 des Spreizkörpers 3 tritt das Schraubengewinde der Spreizschraube 15 in Eingriff mit den Widerlagerelementen 14 des Widerlagerteils 12. Durch Drehung zieht die Spreizschraube 15 den Spreizkörper 3 zwischen die Spreizelemente 5, so dass der Spreizkörper 3 die Spreizelemente 5 mit seinen Spreizflächen 8 auseinander drückt, das heißt aufspreizt. Das Aufspreizen kann auch durch eine Drehung des Spreizkörpers 3 mit der Spreizschraube 15 erfolgen. Dabei lösen sich die Spreizelemente 5 an den Solltrennstellen 21 vom Spreizkörper 3, so dass die Solltrennstellen 21 das Aufspreizen nicht behindern. Da die Solltrennstellen 21 nur eine stoffschlüssige Verbindung darstellen, ist eine Trennung an einer genau definierten Stelle bei einer vorgegebenen Kraft möglich.

Durch das Aufspreizen ist der Spreizdübel 1 im Ankerloch 18 verankert. In Figur 2 hintergreifen die aufgespreizten Spreizelemente 5 die Gipskartonplatte 17 auf ihrer Rückseite.

Wird die Spreizschraube 15 aus dem aufgespreizten Spreizdübel 1 herausgeschraubt, strecken sich die Verbindungselemente 6 wieder in ungefähr ihrer ursprünglichen achsparallelen Richtung und halten den Spreizkörper 3 axial oder zumindest ungefähr axial am Spreizteil 2. Die Verbindungselemente 6 halten den Spreizkörper 3 so ausgerichtet am Spreizteil 2, dass eine Spreizschraube 15, die erneut durch den hülsenförmigen Abschnitt 4 und zwischen den Spreizelementen 5 und den Verbindungselementen 6 des Spreizteils 2 durchgeführt wird, in das axiale Durchgangsloch 7 des Spreizkörpers 3 eintritt und zum Aufspreizen der Spreizelemente 5 beziehungsweise des Spreizdübels 1 eingeschraubt und angezogen werden kann.

### Bezuqszeichenliste

### Spreizdübel

- 1: Spreizdübel
- 2: Spreizteil
- 3: Spreizkörper
- 4: hülsenförmiger Abschnitt
- 5: Spreizelement
- 6: Verbindungselement
- 7: Durchgangsloch des Spreizkörpers 3
- 8: Spreizfläche
- 9: Formschlusselement
- 10: Aussparung
- 11: zylindrischer Abschnitt
- 12: Widerlagerteil
- 13: Loch
- 14: Widerlagerelement
- 15: Spreizschraube
- 16: Lasche
- 17: Gipskartonplatte
- 18: Bohrloch
- 19: Anschlagfläche
- 20: Drehanschlag
- 21: Solltrennstelle
- 22: Bund
- 23: Verdrehsicherungsrippe
- 24: Anbauteil
- L: Längsachse

## Patentansprüche

1. Spreizdübel, mit einem hülsenförmigen Abschnitt (4), einem Spreizkörper (3) und einem zwischen dem hülsenförmigen Abschnitt (4) und dem Spreizkörper (3) angeordneten Spreizteil (2), das Spreizelemente (5) aufweist, die in einem nicht aufgespreizten Zustand einstückig mit dem hülsenförmigen Abschnitt (4) und dem Spreizkörper (3) verbunden sind,
wobei der Spreizkörper (3) mittels einer Spreizschraube (15) zum hülsenförmigen Abschnitt (4) hin bewegbar ist, wodurch der Spreizkörper (3) das Spreizteil (2) aufspreizt, derart, dass die Spreizelemente (5) sich beim Aufspreizen an Solltrennstellen (21) vom Spreizkörper (3) lösen, derart, dass sie in einem aufgespreizten Zustand vom Spreizkörper (3) getrennt sind,
wobei das Spreizteil (2) Verbindungselemente (6) aufweist, die den hülsenförmigen Abschnitt (4) und den Spreizkörper (3) im nicht aufgespreizten Zustand und auch im aufgespreizten Zustand einstückig verbinden,
**dadurch gekennzeichnet,**
**dass** die Verbindungselemente (6) mit dem Spreizkörper (3) formschlüssig verbunden sind.

2. Spreizdübel nach Anspruch 1, **dadurch gekennzeichnet, dass** die Verbindungselemente (6) an ihren dem Spreizkörper (3) zugewandten Enden jeweils mindestens ein Formschlusselement (9) aufweisen, das formschlüssig in den Spreizkörper (3) eingreift.

3. Spreizdübel nach Anspruch 2, **dadurch gekennzeichnet, dass** das Formschlusselement (9) keilartig ausgestaltet ist, mit einer vom hülsenförmigen Abschnitt abgewandten Spitze.

4. Spreizdübel nach einem der Ansprüche 1 bis 3, **dadurch gekennzeichnet, dass** der Spreizkörper (3) aus einem ersten Kunststoff besteht und dass das Spreizteil (2) aus einem zweiten Kunststoff hergestellt ist.

5. Spreizdübel nach Anspruch 4, **dadurch gekennzeichnet, dass** der erste Kunststoff faserverstärkt ist.

6. Spreizdübel nach Anspruch 4 oder 5, **dadurch gekennzeichnet, dass** der erste Kunststoff im Wesentlichen die gleiche Schmelztemperatur aufweist, wie der zweite Kunststoff.

7. Spreizdübel nach einem der Ansprüche 4 bis 6, **dadurch gekennzeichnet, dass** die beiden Kunststoffe Polyamide sind.

8. Spreizdübel nach einem der Ansprüche 1 bis 7, **dadurch gekennzeichnet, dass** die Spreizelemente (5) mit dem Spreizkörper (3) stoffschlüssig verbunden sind.

9. Spreizdübel nach Anspruch 8, **dadurch gekennzeichnet, dass** die stoffschlüssige Verbindung durch lokales Verschweißen durch Anschmelzen der Spreizelemente (5) und/oder des Spreizkörpers (3) bei der Herstellung des Spreizdübels (1) erzeugt wird.

10. Spreizdübel nach Anspruch 8 oder 9, **dadurch gekennzeichnet, dass** die stoffschlüssigen Verbindungen zwischen den Spreizelementen (5) und dem Spreizkörper (3) die Solltrennstellen (21) zwischen den Spreizelementen (5) und dem Spreizkörper (3) bilden.

## Claims

1. Expansible fixing plug, having a sleeve-like portion (4), an expander body (3), and an expansion part (2) which is arranged between the sleeve-like portion (4) and the expander body (3), which expansion part has expansion elements (5) which, in a non-expanded state, are integrally joined to the sleeve-like portion (4) and to the expander body (3),
wherein the expander body (3) is movable towards the sleeve-like portion (4) by means of an expander screw (15), with the result that the expander body (3) expands the expansion part (2) in such a way that, on expansion, the expansion elements (5) become detached from the expander body (3) at predetermined breaking points (21) in such a way that, in an expanded state, they are separate from the expander body (3),
wherein the expansion part (2) has connecting elements (6) which integrally join the sleeve-like portion (4) and the expander body (3) in the non-expanded state and also in the expanded state,
**characterised in that**
the connecting elements (6) are interlockingly connected to the expander body (3).

2. Expansible fixing plug according to claim 1, **characterised in that** the connecting elements (6), at their ends that face towards the expander body (3), each have at least one interlocking element (9) which engages interlockingly in the expander body (3).

3. Expansible fixing plug according to claim 2, **characterised in that** the interlocking element (9) is of wedge-like configuration, with a tip that faces away from the sleeve-like portion.

4. Expansible fixing plug according to any one of claims 1 to 3, **characterised in that** the expander body (3) consists of a first plastics material, and the expansion part (2) is made from a second plastics material.

5. Expansible fixing plug according to claim 4, **characterised in that** the first plastics material is fibre-reinforced.

6. Expansible fixing plug according to claim 4 or 5, **characterised in that** the first plastics material has substantially the same melting temperature as the second plastics material.

7. Expansible fixing plug according to any one of claims 4 to 6, **characterised in that** the two plastics materials are polyamides.

8. Expansible fixing plug according to any one of claims 1 to 7, **characterised in that** the expansion elements (5) are bonded to the expander body (3).

9. Expansible fixing plug according to claim 8, **characterised in that** the bonded connection is created by local welding by fusion of the expansion elements (5) and/or the expander body (3) during the production of the expansible fixing plug (1).

10. Expansible fixing plug according to claim 8 or 9, **characterised in that** the bonded connections between the expansion elements (5) and the expander body (3) form the predetermined breaking points (21) between the expansion elements (5) and the expander body (3).

## Revendications

1. Cheville expansible comprenant une région (4) en forme de douille, un corps d'écartement (3) et une partie déployable (2) qui est interposée entre ladite région (4) en forme de douille et ledit corps d'écartement (3), et est pourvue d'éléments déployables (5) qui, dans un état non déployé, sont reliés d'un seul tenant à ladite région (4) en forme de douille et audit corps d'écartement (3),
lequel corps d'écartement (3) peut être mû en direction de la région (4) en forme de douille, au moyen d'une vis de déploiement (15), d'où il résulte que le corps d'écartement (3) déploie la partie déployable (2) de façon telle que, lors du déploiement, les éléments déployables (5) se dissocient d'avec ledit corps d'écartement (3) dans des zones (21) de séparation programmée, de sorte qu'ils sont séparés d'avec ledit corps d'écartement (3) dans un état déployé,
ladite partie déployable (2) étant munie d'éléments de liaison (6) qui relient d'une seule pièce la région (4) en forme de douille et le corps d'écartement (3), à l'état non déployé et également à l'état déployé,
**caractérisée par le fait**
**que** les éléments de liaison (6) sont reliés au corps d'écartement (3) par complémentarité de formes.

2. Cheville expansible selon la revendication 1, **caractérisée par le fait que** les éléments de liaison (6) sont respectivement dotés, au niveau de leurs extrémités pointant vers le corps d'écartement (3), d'au moins un élément (9) d'engagement par conformation qui pénètre dans ledit corps d'écartement (3) par complémentarité de formes.

3. Cheville expansible selon la revendication 2, **caractérisée par le fait que** l'élément (9) d'engagement par conformation est configuré à la manière d'un coin présentant une pointe éloignée de la région en forme de douille.

4. Cheville expansible selon l'une des revendications 1 à 3, **caractérisée par le fait que** le corps d'écartement (3) est constitué d'une première matière plastique ; et **par le fait que** la partie déployable (2) est fabriquée en une seconde matière plastique.

5. Cheville expansible selon la revendication 4, **caractérisée par le fait que** la première matière plastique est renforcée par des fibres.

6. Cheville expansible selon la revendication 4 ou 5, **caractérisée par le fait que** la première matière plastique présente, en substance, la même température de fusion que la seconde matière plastique.

7. Cheville expansible selon l'une des revendications 4 à 6, **caractérisée par le fait que** les deux matières plastiques sont des polyamides.

8. Cheville expansible selon l'une des revendications 1 à 7, **caractérisée par le fait que** les éléments déployables (5) sont reliés matériellement au corps d'écartement (3).

9. Cheville expansible selon la revendication 8, **caractérisée par le fait que** la solidarisation matérielle est instaurée par soudage localisé, par fusion rapportée des éléments déployables (5) et/ou du corps d'écartement (3) au stade de la fabrication de ladite cheville expansible (1).

10. Cheville expansible selon la revendication 8 ou 9, **caractérisée par le fait que** les solidarisations matérielles, entre les éléments déployables (5) et le corps d'écartement (3), forment les zones (21) de séparation programmée entre lesdits éléments déployables (5) et ledit corps d'écartement (3).
